(19) Europäisches Patentamt
European Patent Office
Office européen des brevets

(11) **EP 3 388 865 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(51) Int Cl.:
*G01S 17/42* *(2006.01)*    *G01S 7/481* *(2006.01)*
*G01S 17/48* *(2006.01)*

(21) Anmeldenummer: **18163353.8**

(22) Anmeldetag: **22.03.2018**

(54) **OPTOELEKTRONISCHER SENSOR UND VERFAHREN ZUR ERFASSUNG EINES OBJEKTS**

OPTOELECTRONIC SENSOR AND METHOD FOR DETECTING AN OBJECT

CAPTEUR OPTOÉLECTRONIQUE ET PROCÉDÉ DE DÉTECTION D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2017 DE 102017107666**

(43) Veröffentlichungstag der Anmeldung:
**17.10.2018 Patentblatt 2018/42**

(73) Patentinhaber: **Sick AG**
**79183 Waldkirch (DE)**

(72) Erfinder:
• **Gimpel, Dr. Hartmut**
**79194 Gundelfingen (DE)**
• **Buser, Roger**
**79106 Freiburg (DE)**

(56) Entgegenhaltungen:
DE-A1-102004 014 041     US-A1- 2015 131 080
US-A1- 2016 041 266     US-A1- 2016 282 453

EP 3 388 865 B1

**Beschreibung**

Die Erfindung betrifft einen optoelektronischen Sensor und ein Verfahren zur Erfassung eines Objekts in einem Überwachungsbereich nach dem Oberbegriff von Anspruch 1 beziehungsweise 13.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Ein mögliches Ergebnis der Auswertung ist eine binäre Objektfeststellung. Oft wird die Lichtlaufzeit mit einem bekannten Phasen- oder Pulsverfahren gemessen, um den Abstand eines angetasteten Objekts zu bestimmen.

Um den Messbereich zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich.

In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Zur Erzeugung der mehreren Messpunkte werden im Stand der Technik Lichtsender und Lichtempfänger in einer Zeile angeordnet. So ist in der US 4 656 462 eine Zeile von LEDs vorgesehen, in der DE 10 2004 014 041 A1 eine Laserzeile, die über eine Optik auf die Umgebung abgebildet wird. Das hat zum einen bauliche Nachteile, wenn die Lichtsender beziehungsweise Lichtempfänger als individuelle Elektronikkomponenten mit eigenem Gehäuse vorliegen. Dann begrenzt die Gehäusegröße, wie nah diese Komponenten sich minimal kommen können. Bei Verwendung einer gemeinsamen Linse wäre jedoch eine dichte Anordnung vorteilhaft.

Außerdem ist jeweils ein Empfangselement für einen Messstrahl zuständig. Dazu muss es so positioniert werden, dass es das schwächste Licht aus der maximalen Messentfernung noch ausreichend erfasst. Für näher kommende Messobjekte wird der Empfangslichtfleck größer, mit einem Abschattungseffekt in der Mitte bei koaxialem Aufbau einem Auswandern zur Seite hin und bei biaxialem Aufbau. Unterhalb eines Minimalabstands werden deshalb noch näher gelegene Objekte nicht mehr detektiert. Das wird herkömmlich durch eine Nahbereichszone der Empfangslinse kompensiert, die das Licht auch im Nahbereich noch auf das Empfangselement lenkt. Eine Ausgestaltung einer Nahbereichszone auf einer Empfangslinse für mehrere Messstrahlen ist jedoch nicht ohne Weiteres möglich und führt zumindest zu höheren Kosten.

In der noch unveröffentlichten deutschen Patentanmeldung mit dem Aktenzeichen 10 2015 121 839 wird unter anderem vorgeschlagen, mit den Sendelichtflecken durch speziell gestaltete Sendeoptiken und ein entsprechendes Array von Lichtsendern ein zweidimensionales Raster zu erzeugen. Das wird als Alternative zu einer äquidistanden Linienanordnung vorgestellt, legt also den Schluss nahe, dass es für andere Anwendungen als eine gleichmäßige Überwachung in einem Laserscanner geeignet ist. Weiter vertieft wird die Alternative in der genannten Patentanmeldung nicht. Auch das Nahbereichsproblem wird nicht angesprochen.

Die DE 197 21 105 A1 befasst sich mit einem hintergrundausblendenden Taster. Eine Empfängerzeile ist in Triangulationsanordnung neben dem Lichtsender angeordnet. Die Position des Lichtflecks auf der Empfängerzeile hängt von dem Abstand des angetasteten Objekts ab. Die einzelnen Empfangselemente werden zu einem Nah- und einem Fernelement zusammengefasst, und ein Schaltsignal wird nur bei Anwesenheitsfeststellung eines Objekts im Nahbereich erzeugt, während Objekte im Fernbereich ausgeblendet werden. Der herkömmliche Taster arbeitet nur mit einem einzigen Messstrahl.

In der EP 2 998 700 B1 wird ein elektrooptischer Distanzmesser beschrieben, der mindestens zwei Empfangselemente aufweist, die jeweils einem unterschiedlichen zu vermessenden Distanzbereich zugeordnet sind. Dadurch kann zwar auf eine Empfangslinse mit besonderer Nahbereichszone verzichtet werden, aber das wird durch mindestens ein zusätzliches Empfangselement erkauft. Außerdem gibt es auch in der EP 2 998 700 B1 nur einen einzigen Messstrahl.

Die US 2015/0131080 A1 offenbart ein Solid State Lidar mit jeweils einer Matrixanordnung von Lichtquellen und Lichtempfangspixeln, die einander durch Optiken und Pulscodierung paarweise zugeordnet sind. In einer Ausführungsform werden mit dem zugeordneten, primären Lichtempfangspixel ergänzend auch die ringförmig umgebenden sekundären Lichtempfangspixel ausgewertet.

Aus der US 2016/0282453 A1 ist ein Laserscanner bekannt, bei dem die Lichtquellen und Lichtempfänger jeweils eine Matrixanordnung bilden.

Die US 2016/0041266A1 beschreibt ein System zur Objektverfolgung mit Lichtlaufzeitmessung und Triangulation.

Es ist daher Aufgabe der Erfindung, die Objekterfassung mit einem mehrstrahligen optoelektronischen Sensors zu verbessern.

Diese Aufgabe wird durch einen optoelektronischen Sensor und ein Verfahren zur Erfassung eines Objekts in einem Überwachungsbereich nach Anspruch 1 beziehungsweise 13 gelöst. Der erfindungsgemäße Sensor kann als ein Mehrfachtaster aufgefasst werden, der mit mindestens einem Lichtsender mehrere Sendelichtstrahlen aussendet. Es sind also mehrere Lichtsender vorhanden, oder das Licht eines Lichtsenders wird in mehrere Sendelichtstrahlen aufgespalten, oder es ist eine Mischung aus beidem vorgesehen. Die Sendelichtstrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Umgekehrt sind mehrere Lichtempfänger vorhanden, um die Lichtstrahlen nach Remission an einem Objekt im Überwachungsbereich zu empfangen. Das können auch mehrere Pixelbereiche eines Zeilen- oder Matrixempfängers sein. Jeweils ein ausgesandter Lichtstrahl und ein zugeordneter Lichtempfänger bilden einen eigenen Überwachungsstrahl, so dass ein Bündel aus Überwachungsstrahlen und im Falle einer Scanbewegung eine Schar von Überwachungsebenen entsteht.

Die Erfindung geht nun von dem Grundgedanken aus, auch Empfangssignale derjenigen Lichtempfänger zur Auswertung eines Überwachungsstrahls mit heranzuziehen, die dem ausgesandten Lichtstrahl nicht zugeordnet sind. Es gibt also mindestens einen ausgesandten Lichtstrahl, zu dessen Auswertung sowohl das Empfangssignal des zugeordneten Lichtempfängers als auch das Empfangssignal eines zusätzlichen Lichtempfängers beiträgt. Der zusätzliche Lichtempfänger fungiert dazu vorzugsweise als zusätzlicher Nahbereichsdetektor. Noch bevorzugter ist der zusätzliche Lichtempfänger zugleich der zugeordnete Lichtempfänger eines anderen ausgesandten Lichtstrahls. Der zusätzliche Nahbereichsdetektor ist dann eine Doppelfunktion ohne zusätzlichen apparativen Aufwand. Die Lichtempfänger können einander so gegenseitig als Nahebereichsdetektoren unterstützen.

Die Erfindung hat den Vorteil, dass ein Sensor mit mehreren Mess- oder Überwachungsstrahlen einen verbesserten Nahbereichsempfang aufweist. Es können genauso viele Überwachungsstrahlen erzeugt werden, wie Lichtempfänger vorhanden sind, und dennoch kann für mindestens einen dieser Überwachungsstrahlen ein erweiterter Nahebereich erfasst werden. Dabei ist eine spezielle Nahbereichszone in der Empfangsoptik oder -linse nicht erforderlich. Ein komplexes Optikdesign, in der möglicherweise die Nahbereichszone durch optische Verluste erkauft werden müsste, kann daher ebenso entfallen, wie eine teure Herstellung und Justierung einer komplexen Linse.

Die Auswertungseinheit ist bevorzugt dafür ausgebildet, aus einer Lichtlaufzeit zwischen Aussenden der ausgesandten Lichtstrahlen und Empfangen der remittierten Lichtstrahlen einen Abstand des Objekts zu bestimmen. Der Sensor wird dadurch entfernungsmessend. Durch die mehreren Sendelichtstrahlen wird der Abstand ortsaufgelöst an mehreren Abtastpunkten bestimmt, wobei Mittelungen oder andere gemeinsame Auswertungen denkbar sind. Alternativ wird lediglich die Anwesenheit eines Objekts festgestellt und beispielsweise als Schaltsignal ausgegeben.

Der Sensor ist bevorzugt als Laserscanner ausgebildet und weist eine bewegliche Ablenkeinheit auf, mit deren Hilfe die ausgesandten Lichtstrahlen periodisch durch den Überwachungsbereich geführt werden und so mehrere Abtastebenen bilden. Die ausgesandten Lichtstrahlen müssen nicht parallel zueinander verlaufen, sondern können beispielsweise ein Strahlenbündel mit einem gegenseitigen Winkelabstand bilden. Dann entstehen genaugenommen keine Abtastebenen, sondern Mantelflächen eines Kegels oder Ausschnitte davon. Das wird hier vereinfachend dennoch als Abtastebene bezeichnet. Die Ablenkeinheit ist vorzugsweise in Form einer drehbaren Abtasteinheit ausgebildet, die praktisch einen beweglichen Messkopf bildet, in dem zumindest der Lichtsender und möglicherweise auch Lichtempfänger und die Auswertungseinheit oder Teile davon untergebracht sind.

Die Anordnung der Lichtempfänger bildet bevorzugt ein zweidimensionales Muster. Die Lichtempfänger sind folglich nicht nur auf einer Achse verteilt wie in einer Zeilenanordnung, sondern auf einer Fläche. Dadurch kann bei gleicher Gesamtanzahl von Lichtempfängern der Durchmesser der Anordnung der Lichtempfänger verringert werden, in der üblichen verallgemeinerten Definition des Durchmessers als größter Abstand zweier Lichtempfänger. Die Anordnung wird kompakter und kann mit einer kleineren gemeinsamen Linse kombiniert werden. Eine zweidimensionale Anordnung ist besonders vorteilhaft, wenn die Empfangselemente relativ baugroß sind, beziehungsweise ein entsprechendes Gehäuse aufweisen, das eine dichte Anordnung in einer Zeile verhindert.

Vorzugsweise bilden die ausgesandten Lichtstrahlen im Querschnitt ein zweidimensionales Muster, insbesondere bis auf Skalierung das gleiche zweidimensionale Muster wie die Anordnung der Lichtempfänger. Den Querschnitt der ausgesandten Lichtstrahlen kann man sich als Strahlenbild auf einem Blatt Papier vorstellen, das senkrecht in die ausgesandten Lichtstrahlen gehalten wird. In einer bevorzugten Ausführungsform der Erfindung, unabhängig von zweidimensionalen Mustern, wird jeder ausgesandte Lichtstrahl von einem eigenen Lichtsender erzeugt. Dann entspricht das zweidimensionale Muster der ausgesandten Lichtstrahlen im Querschnitt gerade der Anordnung der Lichtsender. Ein gleiches Muster von Lichtsendern und Lichtempfängern führt zu einem entsprechenden Muster der Überwachungsstrahlen. Die Formulierung "bis auf Skalierung gleich" bedeutet geometrisch, dass die sende- und empfangsseitigen zweidimensionalen Muster zueinander ähnlich sind, wobei Kongruenz und damit ein Skalierungsfaktor Eins ausdrücklich möglich sind.

Die Richtung, in der die Empfangselemente in Bezug auf die Anordnung der ausgesandten Lichtstrahlen liegen, ist bevorzugt um einen Winkel verdreht. Der Winkel ist ein Freiheitsgrad, der auch bei gleichen oder geometrisch ähnlichen zweidimensionalen Mustern noch bestehen bleibt. Beispielsweise können Spalten in der Anordnung der Empfangselemente in direkter Verlängerung von Spalten in der Anordnung der ausgesandten Lichtstrahlen liegen. Dann wäre der besagte Winkel Null. Der Winkel kann anders gewählt und damit festgelegt werden, welche Lichtempfänger eine geeignete Nachbarschaftsbeziehung aufweisen, um als Nahbereichsdetektoren fungieren zu können.

Das zweidimensionale Muster der Lichtempfänger und/oder das zweidimensionale Muster der ausgesandten Lichtstrahlen weist bevorzugt eine Matrixanordnung auf. Das bedeutet zunächst, dass nicht zwingend insgesamt eine Matrix entsteht, etwa weil noch mindestens ein etwas beabstandeter zusätzlicher Überwachungsstrahl ober-, unterhalb oder neben der Matrixanordnung vorgesehen ist, um von dort noch Zusatzinformation über den Überwachungsbereich zu gewinnen. Vorzugsweise ist das zweidimensionale Muster insgesamt matrixförmig. Eine unterschiedliche Dichte, etwa mehr Überwachungsstrahlen im Zentrum als außen, soll aber möglich bleiben.

Die Matrixanordnung ist bevorzugt schräg gestellt oder gedreht. Das ist unüblich, weil eine Matrix gewöhnlich mit ihrer Zeilenrichtung horizontal ausgerichtet wird. In einem Laserscanner ist der Bezug die Rotationsachse der periodischen Bewegung beziehungsweise die Rotations- oder zentrale Abtastebene. Die Zeilen und entsprechend die Spalten der Matrix sind nach dieser Ausführungsform weder parallel noch senkrecht zu der Rotationsachse und der Rotationsebene. Die Folge ist, dass die Lichtempfänger einer Zeile unterschiedliche Ebenen abtasten.

Die Matrixanordnung ist noch bevorzugter um einen Winkel schräg gestellt, bei dem die Abtastebenen zueinander äquidistant angeordnet sind. Somit wird auch bei der kompakten zweidimensionalen Anordnung eine Abtastung möglich wie bei Verwendung von Zeilen. Äquidistant bezieht sich zunächst auf den maßgeblichen vertikalen Abstand der Lichtsender beziehungsweise Lichtempfänger. Die Abtastebenen müssen nicht parallel verlaufen, sondern können mit der Entfernung auseinanderlaufen. In einer Betrachtung zu jeder festen Entfernung zum Zentrum bleibt es jedoch bei äquidistanten Abständen der Abtastebenen zueinander. Gewisse Toleranzen sind von einer äquidistanten Anordnung umfasst. Das gilt zumindest für Toleranzen, die nur zu Fehlern in Winkelrichtung führen, die bei typischen Objektentfernungen in der Größenordnung der Messgenauigkeit in Abstandsrichtung führen. Der erforderliche Winkel lässt sich bei gegebener Anordnung geometrisch berechnen. Alternativ lässt sich der Winkel auch experimentell bestimmen, etwa indem eine Sendeanordnung mit sichtbarem Licht verwendet wird, die ja bei richtigem Winkel auf einer Projektionsfläche wie einem Blatt Papier im Strahlengang eine Parallelenschar zeichnet.

Die Auswertungseinheit ist bevorzugt dafür ausgebildet, die Lichtsender und Lichtempfänger in einem Multiplexverfahren nacheinander zu aktivieren, wobei während des Aussendens eines ausgesandten Lichtstrahls der jeweils zugeordnete Lichtempfänger aktiv ist, und für zumindest einen ausgesandten Lichtstrahl ist zusätzlich mindestens ein weiterer Lichtempfänger aktiviert, der nicht dem ausgesandten Lichtstrahl zugeordnet ist. Gerade in einer solchen Ausführungsform ist vorzugsweise je ein eigener Lichtsender je ausgesandtem Lichtstrahl vorgesehen, da durch Optiken geteilte Lichtstrahlen nicht oder nur eingeschränkt einzeln aktivierbar sind. Das Multiplexverfahren hat gleich zwei Vorteile. Zu den Lichtsendern und Lichtempfängern sind Treiberstufen beziehungsweise analoge oder digitale Auswertungsstufen wie Verstärker oder Filter vorgesehen. Ohne Multiplexing müssten solche Stufen für jeden Lichtsender und jeden Lichtempfänger verbaut werden, und zu der komplexen Schaltungsstruktur käme eine große Leistungsaufnahme hinzu. Außerdem können dadurch Lichtempfänger als zusätzliche Lichtempfänger für einen anderen als den zugeordneten ausgesandten Lichtstrahl fungieren, da es immer wieder freie Phasen gibt, in denen der zugeordnete ausgesandte Lichtstrahl inaktiv ist.

Prinzipiell können auch alle Lichtempfänger ständig aktiv sein, um als zusätzliche Lichtempfänger für den gerade aktiven ausgesandten Lichtstrahl zu fungieren, aber viele dieser zusätzlichen Lichtempfänger würden dann nur Rauschen beitragen. Es ist auch nicht erforderlich und nicht einmal unbedingt sinnvoll, alle ausgesandten Lichtstrahlen mit mehreren Lichtempfängern zu empfangen, denn für einige Überwachungsstrahlen gibt es in der regulären Anordnung gar keine geeignet angeordneten Lichtempfänger, die ein Nahbereichssignal erzeugen könnten. Das ist kein großer Nachteil, denn bei nahen Objekten liegen die Überwachungsstrahlen ohnehin noch sehr dicht, so dass es für die Messgenauigkeit keine wesentliche Rolle spielt, welcher Überwachungsstrahl das Objekt erfasst. Das Multiplexing ist vorzugsweise ein Zeitmultiplexing, um von den geschilderten Vorteilen in Bezug auf Schaltungsstufen und Leistungsaufnahme zu profitieren. Insbesondere in Bezug auf die Nahbereichsdetektion sind aber auch andere Möglichkeiten denkbar, etwa eine Amplitudenmodulation mit unterschiedlicher Frequenz je ausgesandtem Lichtstrahl und einer Separation der Empfangssignale anhand der Frequenz durch eine Fourieranalyse oder nach dem Prinzip des Lock-In-Verstärkers.

Die Auswertungseinheit ist bevorzugt dafür ausgebildet, das Empfangssignal des dem ausgesandten Lichtstrahl zugeordneten Lichtempfängers und das mindestens eine zusätzlich berücksichtigte Empfangssignal einzeln auszuwerten, um die Ergebnisse zu vergleichen oder zu verrechnen, oder daraus ein gemeinsames Signal zu bilden und auszuwerten. Der zusätzliche Lichtempfänger fungiert, wie mehrfach angesprochen, als Nahebereichsdetektor. Folglich wird im Regelfall je nach Abstand des angetasteten Objekts der eigentlich zuständige, dem ausgesandten Lichtstrahl zugeordnete Lichtempfänger oder der zusätzliche Lichtempfänger das bessere Ergebnis liefern. Daher kann zu Beginn der Auswertung eine Entscheidung etwa anhand des Pegels erfolgen, welches Empfangssignal weiter ausgewertet wird. In anderen Ausführungsformen folgen separate Auswertungen und ein Vergleich oder ein Verrechnen auf Ebene von Abständen oder sonstigen Auswertungsergebnissen. Denkbar ist auch, die Empfangssignale in ihrer Rohform zu kombinieren, beispielsweise als Summensignal.

Die Auswertungseinheit ist bevorzugt dafür ausgebildet, das Empfangssignal des dem ausgesandten Lichtstrahl zugeordneten Lichtempfängers und das mindestens eine zusätzlich berücksichtigte Empfangssignal nach dem Triangulationsprinzip für eine Entfernungsschätzung auszuwerten. Bisher wurde der zusätzliche Lichtempfänger als unterstützender Nahbereichsdetektor beschrieben. Die an der Überwachung mit einem bestimmten ausgesandten Lichtstrahl beteiligten Lichtempfänger können aber auch gemeinsam nach Art eines Triangulationstasters ausgewertet werden. Es wird also ausgewertet, auf welchem Lichtempfänger ein Empfangslichtfleck registriert wird, und aus dieser Position wird nach dem Triangulationsprinzip ein Objektabstand geschätzt. Diese Schätzung kann relativ grob sein, beispielsweise nur nah oder fern im Falle von zwei beteiligten Lichtempfängern, und wird mit der Anzahl beteiligter Lichtempfänger feiner. Das Ergebnis kann ein eigener Messwert sein oder zur Plausibilisierung eines mit einem Lichtlaufzeitverfahren bestimmten Messwerts herangezogen werden.

Den Lichtempfängern ist vorzugsweise eine gemeinsame Empfangslinse vorgeordnet. Die Empfangslinse kann Teil einer komplexeren Empfangsoptik sein. Denkbar ist auch eine gemeinsame Empfangslinse, die nur für eine bestimmte Teilgruppe der Lichtempfangselemente zuständig ist. Indem erfindungsgemäß der Nahbereich durch die zusätzlichen beziehungsweise zusätzlich aktiven Lichtempfänger abgedeckt wird, kann die Empfangslinse einfach sein und bedarf keiner Nahzone, obwohl eine Nahzone nicht ausgeschlossen ist und die Nahbereichserfassung weiter verbessern und noch nähere Abstände erfassbar machen kann.

Sendeseitig ist eine entsprechende gemeinsame Sendelinse oder -optik denkbar, die insbesondere zugleich dafür ausgebildet ist, das Licht eines Lichtsenders in mehrere ausgesandte Lichtstrahlen aufzuspalten.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     eine Schnittdarstellung eines als Laserscanner ausgebildeten optischen Sensors;

Fig. 2a    eine schematische Darstellung einer beispielhaften Senderanordnung in einer gedrehten Matrix zur Erzeugung einer äquidistanten Abtastung;

Fig. 2b    eine schematische Darstellung einer beispielhaften alternativen Senderanordnung in einer gedrehten Matrix zur Erzeugung einer äquidistanten Abtastung;

Fig. 3     eine beispielhafte Darstellung des Strahlenverlaufs durch eine Senderanordnung nach Figur 2a oder 2b;

Fig. 4     eine Skizze zur Veranschaulichung der geometrischen Größen für die Berechnung des erforderlichen Drehwinkels der gedrehten Matrix aus Figur 2a;

Fig. 5     beispielhafte Empfangssignale für Lichtempfänger bei einer Senderanordnung gemäß Figur 2b und entsprechender Empfängeranordnung;

Fig. 6a    eine schematische Darstellung einer Senderanordnung gemäß Figur 2b mit dazu versetzter gleichartiger Empfängeranordnung ohne gegenseitige Verdrehung; und

Fig. 6b    eine schematische Darstellung ähnlich Figur 6a, jedoch mit gegenseitiger Verdrehung von 45°.

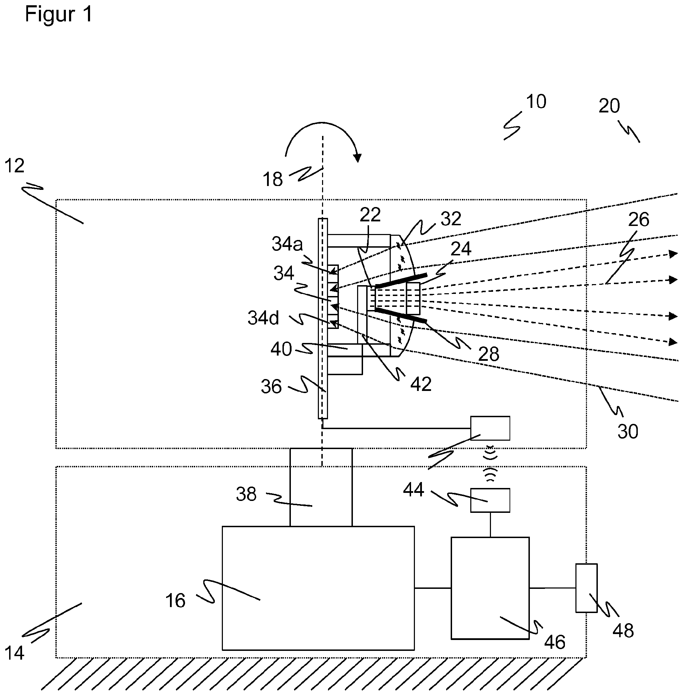

Fig. 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

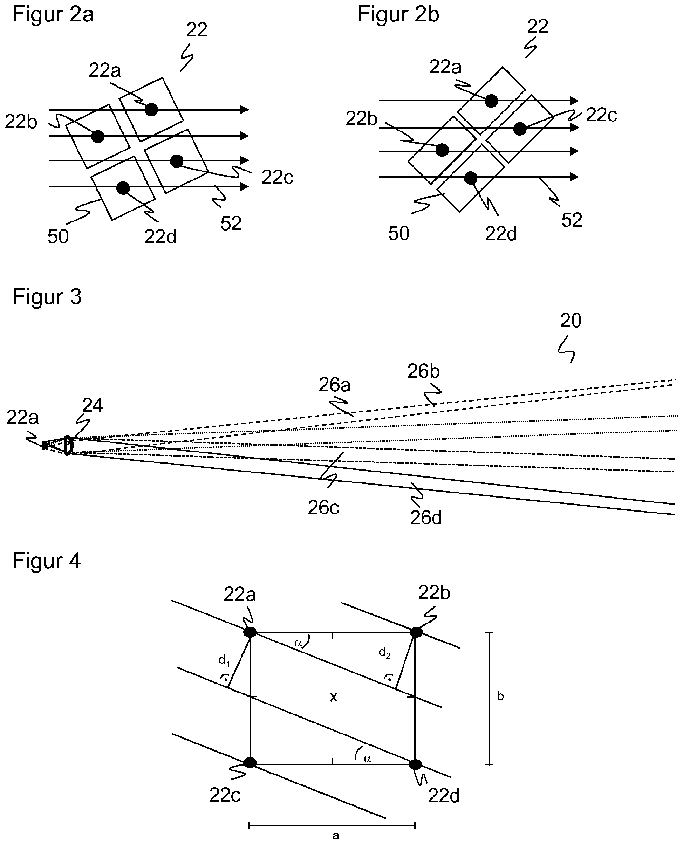

In der Abtasteinheit 12 erzeugen ein Lichtsender 22, beispielsweise mit LEDs oder Lasern in Form von Kantenemittern oder VCSELs, mit einer Sendeoptik 24 mehrere Sendelichtstrahlen 26 mit gegenseitigem Winkelversatz, die in den Überwachungsbereich 20 ausgesandt werden. Zur Vermeidung von Streulicht innerhalb des Sensors 10 kann der interne Lichtweg der Sendelichtstrahlen 26 von einem lichtundurchlässigen Tubus 28 abgeschirmt werden. Treffen die Sendelichtstrahlen 26 in dem Überwachungsbereich 20 auf ein Objekt, so kehren entsprechende remittierte Lichtstrahlen 30 zu dem Sensor 10 zurück. Die remittierten Lichtstrahlen 30 werden von einer Empfangsoptik 32 auf einen Lichtempfänger 34 geführt. Der Lichtempfänger 34 weist mehrere Empfangselemente 34a-d auf und ist deshalb in der Lage, aus jedem der remittierten Lichtstrahlen 30 ein eigenes elektrisches Empfangssignal zu erzeugen. Dafür sind mehrere Photodioden oder APDs (Avalanche Diode) denkbar, aber auch ein Bildsensor mit entsprechend zugeordneten Einzelpixeln oder Pixelgruppen. Eine weitere denkbare Ausführungsform sieht einen SPAD-Empfänger (Single-Photon Avalanche Diode) mit einer Vielzahl von SPADs vor. Sie haben eine relative große Empfangsfläche und sind daher gut angepasst an eine im Vergleich zu Einzelstrahlsensoren eventuell erhöhte Strahldivergenz. Die Anordnung in dem Lichtsender 22 und dem Lichtempfänger 34 ist in der Schnittdarstellung der Figur 1 jeweils eine Zeile. Anhand der Figuren 2 bis 4 und 6 werden weiter unten alternative zweidimensionale Anordnungen erläutert.

Der Lichtempfänger 34 ist auf einer Leiterkarte 36 angeordnet, die auf der Drehachse 18 liegt und mit der Welle 38 des Antriebs 16 verbunden ist. Die Empfangsoptik 32 stützt sich durch Beinchen 40 auf der Leiterkarte 36 ab und hält eine weitere Leiterkarte 42 der Lichtsendereinheit 22. Die beiden Leiterkarten 36, 42 sind untereinander verbunden und können auch als gemeinsame Flexprint-Leiterkarte ausgebildet sein.

Der in Figur 1 gezeigte Aufbau mit zwei übereinander geschichteten Leiterkarten 36, 42 oder Leiterkartenbereichen und einer zentral innerhalb der Empfangsoptik 32 angeordneten gemeinsamen Sendeoptik 24 ist rein beispielhaft zu verstehen. So wäre alternativ jede andere an sich beispielsweise von eindimensionalen optoelektronischen Sensoren oder Laserscannern bekannte Anordnung wie etwa die Verwendung eines Umlenk- oder Strahlteilerspiegels möglich. Besonders erwähnt sei ein biaxialer Aufbau anstatt des dargestellten koaxialen Aufbaus. Dabei liegen Lichtsender 22 und Lichtempfänger 34 nicht auf einer gemeinsamen Achse, sondern nebeneinander. In einem koaxialen Aufbau wird der Empfangslichtfleck mit kleinen Abständen größer, wobei durch die Sendeoptik 24 ein zentraler Bereich abgeschattet wird. Bei biaxialem Aufbau wächst der Empfangslichtfleck ebenfalls mit kleinen Abständen und wandert zugleich auf der Verbindungsachse von Lichtsender 22 und Lichtempfänger 34 aus. Diese auch als Triangulationseffekt bezeichnete Abhängigkeit von Objektabstand und Position des Empfangslichtflecks kann vorteilhaft genutzt werden.

Weiterhin ist denkbar, Lichtsendereinheit 22 und Lichtempfänger 34 auf einer gemeinsamen Leiterkarte zu montieren, bei gegenüber Figur 1 veränderter Anordnung auch auf einer gemeinsamen Leiterkarte, die in nur einer Ebene liegt.

Eine berührungslose Versorgungs- und Datenschnittstelle 44 verbindet die bewegliche Abtasteinheit 12 mit der ruhenden Sockeleinheit 14. Dort befindet sich eine Steuer- und Auswertungseinheit 46, die zumindest teilweise auch auf der Leiterkarte 36 oder an anderem Ort in der Abtasteinheit 12 untergebracht sein kann. Die Steuer- und Auswertungseinheit 46 steuert die Lichtsendereinheit 22 und erhält das Empfangssignal des Lichtempfängers 34 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen Sendelichtstrahls 26 beziehungsweise remittierten Lichtstrahls 30 und dessen Erfassungsort auf dem Lichtempfänger 34 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 48 ausgegeben werden. Die Sensorschnittstelle 48 oder ein weiterer, nicht gezeigter Anschluss dienen umgekehrt als Parametrierschnittstelle.

Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 48 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Alternativ ist auch eine periodische Ablenkung mittels Drehspiegel denkbar. Bei mehreren Sendelichtstrahlen 26 hat das aber den Nachteil, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen.

Auch die Ausführung als Laserscanner ist beispielhaft. Es ist auch ein eindimensionaler Taster ohne periodische Bewegung möglich, der dann praktisch nur aus der ruhenden Abtasteinheit 12 mit entsprechender Elektronik, jedoch ohne Sockeleinheit 14 besteht.

Während der Rotation des Sensors 10 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Flächen werden hier manchmal vereinfachend als Abtastebenen bezeichnet.

Figur 2a zeigt eine schematische Darstellung von in diesem Beispiel vier Sendeelementen 22a-d, die zu einem Quadrat angeordnet sind. Die Sendeelemente 22a-d sind jeweils von einem Gehäuse 50 umgeben. Das Gehäuse 50 begrenzt die Dichte, mit der Sendeelemente 22a-b zueinander angeordnet sind. Ersichtlich kann durch eine zweidimensionale Anordnung anstelle einer Zeilenanordnung eine deutlich kompaktere Anordnung erzielt werden.

Das Quadrat aus den Sendeelementen 22a-d ist um einen passenden Winkel von in diesem Fall 26,57° verdreht, damit gegen die erste Intuition auch ohne Zeilenanordnung äquidistante Abtastebenen erzeugt werden, mit denen der Überwachungsraum mit gleichmäßiger Winkelauflösung erfasst wird. Das ist durch Pfeile 52 angedeutet, welche die Scanlinien darstellen und äquidistant und parallel sind. Die Pfeile 52 stehen senkrecht zur Rotationsachse und bilden auch den Bezug für den Winkel, um den das Quadrat verdreht ist.

Figur 2b zeigt ein weiteres Beispiel. Im Unterschied zu Figur 2a sind hier die vier Sendeelemente 22a-d statt zu einem Quadrat zu einem Rechteck mit Seitenverhältnis 2:1 angeordnet. Wenn der Winkel auf nun 45° angepasst wird, lassen sich damit ganz genauso äquidistante Abtastebenen erzeugen.

Figur 3 zeigt in einer Schnittdarstellung die vier resultierenden Sendelichtstrahlen 26a-d. Sie haben zueinander wie gewünscht einen gleichen Winkelabstand. Ein zusätzlicher Abstand in Drehrichtung, hier also senkrecht zu der Papierebene, spielt für das Messergebnis keine Rolle und könnte in der Auswertung kompensiert werden.

Figur 4 ist eine geometrische Skizze, auf deren Basis die Berechnung des Winkels $\alpha$ erläutert wird, um welche die Anordnung aus den Sendeelementen 22a-d in Figur 2a-b verdreht ist. Unter Bezugnahme auf die in Figur 4 gezeigten Variablen ist der Winkel $\alpha$ gesucht, für den die Strahlen entsprechend den Pfeilen 52 einen gleichen Abstand zueinander haben, mithin soll gelten $d_1 = d_2$. Nach Strahlensatz ist das gleichbedeutend damit, dass die vertikale Seite der Anordnung mittig geteilt werden soll. Es gilt folglich in dem rechtwinkeligen Dreieck für die beiden Ankatheten am Sendeelement 22b die Beziehung $\tan \alpha = \frac{b}{2a}$. In der quadratischen Anordnung der Figur 2a ist $a = b$ und damit $\alpha = arctan\frac{1}{2} = 26{,}57°$. In dem Rechteck mit Seitenverhältnis 2:1 der Figur 2b ist $2a$ = b und $\alpha$ = arctan 1 = 45°.

Die Beispiele in den Figuren 2 bis 4 zeigen jeweils vier Sendeelemente 22a-d. Die Erfindung ist auf keine bestimmte Anzahl beschränkt. Für eine beliebige n x m Matrixanordnung berechnet sich der Winkel, indem die jeweilige vertikale Seite der Anordnung nicht mehr bei $\frac{1}{2}$ geteilt wird, sondern in einem anderen Verhältnis, das durch die Anzahl und Anordnung von Sendeelementen 22a-d gegeben ist. Aufgrund der Regelmäßigkeit gibt es auch hier einen passenden Winkel. Alternativ zu einer Berechnung kann der Winkel auch durch Probieren unterschiedlicher Drehstellungen gefunden werden. Es ist zwar wegen der gleichmäßigen Messauflösung vorteilhaft, die Messebenen durch einen passenden Winkel äquidistant zu wählen, aber davon kann in anderen Ausführungsformen gezielt abgewichen werden. Ohnehin sind auch andere 2D-Anordnungen als eine Matrix denkbar. Dazu zählen Anordnungen, die noch auf einer Matrix basieren, etwa indem lediglich einige äußere Sendelichtstrahlen 26 zu einer Matrix hinzukommen oder die Dichte der Matrix nach außen hin abnimmt, aber auch allgemeine 2D-Anordnung.

Für die Anordnung der Empfangselemente 34a-d gilt Entsprechendes. Zudem kann Form und Größe der Empfangselemente 34a-d zur weiteren Anpassung variiert werden, beispielsweise mit ringförmigen Empfangselementen.

Die Grundordnung in dem Sensor 10 ist, dass jeweils ein Sendeelement 22a-d einen Sendelichtstrahl 26 aussendet, der als remittierter Lichtstrahl 30 auf ein Empfangselement 34a-d fällt. Somit ist jedes Empfangselement 34a-d einem bestimmten Sendelichtstrahl 22a-d zugeordnet, und damit auch einem Sendeelement 26a-d, sofern die Sendelichtstrahlen 22a-d nicht erst durch Aufteilung in der Sendeoptik 24 entstehen. Wie oben schon erklärt, wandert in einem biaxialen Aufbau der Empfangslichtfleck je nach Abstand des Objekts auf dem Lichtempfänger 34 aus und vergrößert sich in koaxialem Aufbau. Dadurch trifft der Empfangslichtfleck bei nahen Abständen das zugeordnete Empfangselement 34a-d der Grundordnung nicht mehr.

Die Erfindung macht sich nun die Tatsache zunutze, dass es in der Anordnung der Empfangselemente 34a-d benachbarte Empfangselemente 34a-d gibt, zu denen der Empfangslichtfleck auswandert. Es fungieren also Empfangselemente 34a-d, die eigentlich für einen bestimmten Sendelichtstrahl 22a-d nicht zuständig sind, als zusätzliche Nahbereichsdetektoren des zuständigen Empfangselements 34a-d. Prinzipiell ist auch denkbar, dafür mehr Empfangselemente 34a-d als Sendeelemente 22a-d vorzusehen, aber das erfordert Zusatzaufwand.

Die mehreren Sendeelemente 22a-d des Lichtsenders 22 beziehungsweise mehreren Empfängerelemente des Lichtempfängers 34 könnten simultan betrieben werden, um eine möglichst hohe Messwiederholfrequenz zu erreichen. In einer vorteilhaften Ausführungsform ist stattdessen ein Multiplexbetrieb vorgesehen. Beispielsweise werden die Sendeelemente 22a-d und das jeweils zugeordnete Empfangselement 34a-d nacheinander zyklisch paarweise aktiviert, um jeweils einen Überwachungsstrahl auszuwerten. Um zusätzliche Nahbereichsdetektoren zu gewinnen, wird mindestens für ein Sendeelement 22a-d während dessen Aktivität außer dem zugeordneten Empfangselement 34a-d auch noch mindestens ein weiteres, vorzugsweise benachbartes Empfangselement aktiviert, d.h. dessen Empfangssignal ausgelesen und ausgewertet.

Der Multiplexbetrieb hat mehrere Vorteile. Zum einen kann auf diese Weise eindeutig zugeordnet werden, zu welchem Sendeelement 22a-d und damit Überwachungsstrahl ein Empfangssignal gehört. Außerdem kommt der Sensor 10 auf diese Weise mit deutlich weniger Elektronikkomponenten aus, denn beispielsweise Treiberstufen der Sendeelemente 22a-d und Verstärkeroder Filterstufen der Empfangselemente 34a-d können mittels Multiplexing mehrfach verwendet werden. Dadurch reduziert sich auch die Leistungsaufnahme und Abwärme.

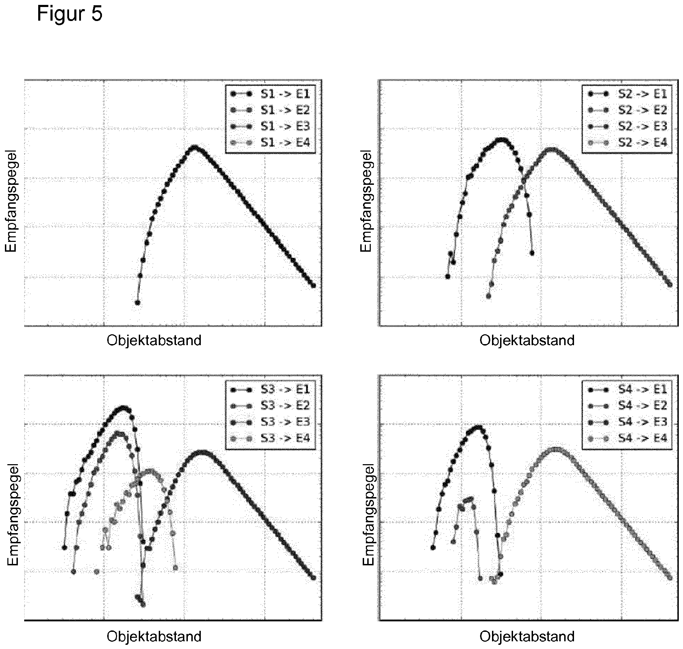

Figur 5 zeigt Beispiele der Empfangssignale auf den Empfangselementen 34a-d einer Viereranordnung entsprechend Figur 2b. Dabei sendet in den vier Einzeldarstellungen jeweils nur ein Sendeelement 22a-d wie in der Legende angegeben. Dargestellt sind die jeweiligen Empfangssignale auf allen vier Empfangselementen 34a-d in Form der Intensität in Abhängigkeit vom Objektabstand. Die Anordnung von Lichtsender 22 und Lichtempfänger 34 ist hier biaxial. Die abstandsabhängige Wanderbewegung des Empfangslichtflecks erfolgt auf der Achse zwischen Lichtsender 22 und Lichtempfänger 34 und wirkt sich daher auf die einzelnen Empfangselemente 34a-d sehr unterschiedlich aus. Nicht alle Empfangselemente 34a-d haben in der relevanten Richtung einen Nachbarn. Deshalb wird beispielsweise das Licht des ersten Sendeelements 22a, wie oben links dargestellt, ausschließlich auf dem ersten Empfangselement 34a registriert.

Das Licht des dritten Sendeelements 22c dagegen detektieren neben dem zugeordneten dritten Empfangselement 34c im mittleren und Fernbereich sogar alle übrigen Empfangselementen 34a-b, 34d im Nahbereich. Daher kann mindestens eines dieser Empfangselemente 34a-b, 34d als zusätzlicher Nahbereichsdetektor fungieren.

Zumindest zu einem Sendeelement 22a-d gibt es also Empfangselemente 34a-d in einer für Nahebereichsdetektion geeigneten Position. Bei biaxialem Aufbau finden sich geeignete Nachbarn auf oder in der Nähe der Verbindungsachse von Lichtsender 22 und Lichtempfänger 34 in Richtung weg von dem Lichtsender 22, denn in dieser Richtung wandert der Empfangslichtfleck bei nahen Objekten aus. Bei koaxialem Aufbau sind es Nachbarn im Umkreis, um den sich im Nahbereich vergrößernden Empfangslichtfleck zu detektieren.

Es ist nur ein scheinbarer Nachteil, dass nicht alle Überwachungsstrahlen mit zusätzlichen Nahbereichsdetektoren ausgewertet werden können. Im Nahbereich liegen die Überwachungsstrahlen ohnehin noch sehr dicht, so dass der Gewinn an Messauflösung durch Mehrfachabtastung relativ gering wäre.

Die konkrete Auswertung der mehreren Empfangssignale kann auf unterschiedliche Weise erfolgen. Sehr einfach ist, direkt am Anfang ein Summensignal zu bilden. Alternativ werden die Empfangssignale verglichen, und beispielsweise nur das stärkste Empfangssignal wird ausgewertet. Ein weiteres Beispiel ist, die Empfangssignale einzeln auszuwerten, etwa Lichtlaufzeiten zu bestimmen, und auf Ebene dieser Ergebnisse zu vergleichen, zu mitteln oder anders zu verrechnen.

In einer Ausführungsform wird zusätzlich oder alternativ zu der Erweiterung der Pegelkurve im Nahbereich die örtliche Verteilung des Empfangslichts auf den mehreren aktiven Empfangselementen 34a-d ausgewertet. Nach dem Triangulationsprinzip wird dabei aus der Position des Empfangslichtflecks ein Abstand geschätzt. Dieser Abstand ist je nach Anzahl aktiver Empfangselemente 34a-d nur grob, kann aber zumindest zum Plausibilisieren und als Schätzwert für den Fall verwendet werden, dass eine Lichtlaufzeitmessung nicht implementiert ist oder aktuell keinen Messwert liefert. Die Abstandsauflösung lässt sich außerdem durch Erhöhung der Anzahl von Empfangselementen 34a-d verfeinern.

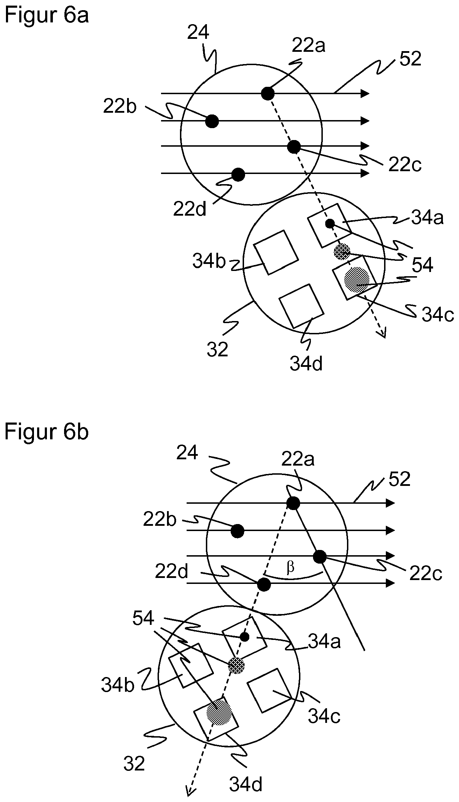

Anhand der Figur 6 soll noch ein weiterer Freiheitsgrad der Anordnung von Sendeelementen 22a-d und Empfangselementen 34a-d erläutert werden, nämlich die Richtung, in der die Empfangselemente 34a-d in Bezug auf die Anordnung der Sendeelemente 22a-d liegen. Dies wird durch einen weiteren Winkel $\beta$ bezeichnet, und durch dessen Wahl können geeignete Nachbarschaftsbeziehungen für als Nahbereichsdetektor fungierende Empfangselemente 34a-d geschaffen werden.

Figur 6a zeigt ein erstes Beispiel mit $\beta = 0$. Die Spalten der Matrixanordnung der Empfangselemente 34a-d liegen in direkter Verlängerung zu den Sendeelementen 22a-d, bilden also gemeinsame Spalten. Der Empfangslichtfleck 54 wandert folglich in Spaltenrichtung aus. Für den Sendelichtstrahl des Sendeelements 22a ist hier zusätzlich zu dem zugeordneten Empfangselement 34a das Empfangselement 34c als Nahbereichsdetektor geeignet, entsprechend Empfangselement 34d zu Empfangselement 34b. Diese Wahl von β ist also vorteilhaft, da sie direkte Nachbarschaftsbeziehungen sogar für mehrere Empfangselemente 34a-d schafft.

Figur 6b zeigt ein weiteres Beispiel mit β = 45°. Nun sind die Hauptdiagonalen der Anordnungen von Sendeelementen 22a-d und Empfangselementen 34a-d zueinander ausgerichtet, und das Empfangselement 34d unten auf der Diagonalen eignet sich als Nahbereichsdetektor zu dem Empfangselement 34a oben auf der Diagonalen. Die beiden Beispiele illustrieren die obigen allgemeinen Ausführungen, dass Nahbereichsdetektoren auf der Verbindungsachse zwischen Lichtsender 22 und Lichtempfänger 34 in Richtung weg von dem Lichtsender zu finden sind. Die beiden Beispiele für β zeigen eine vorteilhafte Wahl, damit sich an den so bezeichneten Positionen auch tatsächlich Empfangselemente 34a-d befinden. Für unterschiedliche Anordnungen von Sendeelementen 22a-d und Empfangselementen 34a-d können aber mit passendem β auch andere sinnvolle Nachbarschaftsbeziehungen designt werden. Es sei der Vollständigkeit halber erwähnt, dass für die beispielhaften Empfangssignale der Figur 5 eine Anordnung mit β = 45° zugrunde gelegt wurde.

**Patentansprüche**

1. Optoelektronischer Sensor (10) zur Erfassung eines Objekts in einem Überwachungsbereich (20), der mindestens einen Lichtsender (22) zum Aussenden mehrerer voneinander separierter ausgesandter Lichtstrahlen (26a-d), mehrere Lichtempfänger (34a-d), die jeweils gemäß einer Grundordnung einem der ausgesandten Lichtstrahlen (26a-d) zugeordnet sind, zum Erzeugen eines Empfangssignals aus dem zugeordneten, an dem Objekt remittierten Lichtstrahl (26, 30) und eine Auswertungseinheit (46) aufweist, die dafür ausgebildet ist, Informationen über das Objekt an dem jeweiligen Auftreffort des ausgesandten Lichtstrahls (26a-d) aus dem Empfangssignal des Lichtempfängers (34a-d) zu gewinnen, der dem ausgesandten Lichtstrahl (26a-d) zugeordnet ist, wobei jeweils ein ausgesandter Lichtstrahl (26a-d) und ein zugeordneter Lichtempfänger (34a-d) einen eigenen Überwachungsstrahl bilden und ein Empfangslichtfleck bei nahen Abständen des Objekts den gemäß der Grundordnung zugeordneten Lichtempfänger (34a-d) nicht mehr trifft, **dadurch gekennzeichnet, dass** die Auswertungseinheit (46) weiterhin dafür ausgebildet ist, bei der Gewinnung von Informationen über das Objekt an dem Auftreffort mindestens eines ausgesandten Lichtstrahls (26a-d) zusätzlich mindestens ein Empfangssignal eines Lichtempfängers (34a-b) zu berücksichtigen, der nicht dem ausgesandten Lichtstrahl (26a-d) zugeordnet ist, so dass zur Auswertung des mindestens einen ausgesandten Lichtstrahls (26a-d) ein zusätzlicher Lichtempfänger (34a-b) beiträgt, der als zusätzlicher Nahbereichsdetektor des zugeordneten Lichtempfängers (34a-d) fungiert.

2. Sensor (10) nach Anspruch 1, wobei die Auswertungseinheit (46) dafür ausgebildet ist, aus einer Lichtlaufzeit zwischen Aussenden der ausgesandten Lichtstrahlen (26a-d) und Empfangen der remittierten Lichtstrahlen (30) einen Abstand des Objekts zu bestimmen.

3. Sensor (10) nach Anspruch 1 oder 2, der als Laserscanner ausgebildet ist und eine bewegliche Ablenkeinheit (12) aufweist, mit deren Hilfe die ausgesandten Lichtstrahlen (26a-d) periodisch durch den Überwachungsbereich (20) geführt werden und so mehrere Abtastebenen bilden, wobei insbesondere die Ablenkeinheit (12) in Form einer drehbaren Abtasteinheit (12) ausgebildet ist, in welcher der Lichtsender (22) untergebracht ist.

4. Sensor (10) nach einem der vorhergehenden Ansprüche, wobei die Anordnung der Lichtempfänger (34a-d) ein zweidimensionales Muster bildet.

5. Sensor (10) nach Anspruch 4, wobei die ausgesandten Lichtstrahlen (26a-d) im Querschnitt ein zweidimensionales Muster bilden, insbesondere bis auf Skalierung das gleiche zweidimensionale Muster wie die Anordnung der Lichtempfänger (34a-d).

6. Sensor (10) nach Anspruch 5, wobei die Richtung, in der die Empfangselemente (34a-d) in Bezug auf die Anordnung der ausgesandten Lichtstrahlen (26a-d) liegen, um einen Winkel (β) verdreht ist.

7. Sensor (10) nach Anspruch 5 oder 6, wobei das zweidimensionale Muster der Lichtempfänger und (34a-d)/oder das zweidimensionale Muster der ausgesandten Lichtstrahlen (26a-d) eine Matrixanordnung aufweist.

8. Sensor (10) nach Anspruch 7, wobei die Matrixanordnung schräg gestellt ist.

9. Sensor (10) nach Anspruch 3 und 8, wobei die Matrixanordnung um einen Winkel (α) schräg gestellt ist, bei dem die Abtastebenen zueinander äquidistant angeordnet sind.

10. Sensor (10) nach einem der vorhergehenden Ansprüche, wobei die Auswertungseinheit (46) dafür ausgebildet ist, die Lichtsender (22a-d) und Lichtempfänger (34a-d) in einem Multiplexverfahren nacheinander zu aktivieren, wobei während des Aussendens eines ausgesandten Lichtstrahls (26a-d) der jeweils zugeordnete Lichtempfänger (34a-d) aktiv ist, und für zumindest einen ausgesandten Lichtstrahl (26a-d) zusätzlich mindestens ein weiterer Lichtempfänger (34a-d) aktiviert ist, der nicht dem ausgesandten Lichtstrahl (26a-d) zugeordnet ist.

11. Sensor (10) nach einem der vorhergehenden Ansprüche,
wobei die Auswertungseinheit (46) dafür ausgebildet ist, das Empfangssignal des dem ausgesandten Lichtstrahl (26a-d) zugeordneten Lichtempfängers (34a-d) und das mindestens eine zusätzlich berücksichtigte Empfangssignal einzeln auszuwerten, um die Ergebnisse zu vergleichen oder zu verrechnen, oder daraus ein gemeinsames Signal zu bilden und auszuwerten.

12. Sensor (10) nach einem der vorhergehenden Ansprüche,
wobei den Lichtempfängern (34a-d) eine gemeinsame Empfangslinse (32) vorgeordnet ist.

13. Verfahren zur Erfassung eines Objekts in einem Überwachungsbereich (20), bei dem mehrere voneinander separierte Lichtstrahlen (26a-d) in den Überwachungsbereich (20) ausgesandt und die von dem Objekt remittierten Lichtstrahlen (30) in einem jeweils gemäß einer Grundordnung dem ausgesandten Lichtstrahl (26a-d) zugeordneten Lichtempfänger (34a-d) empfangen werden, um ein jeweiliges Empfangssignal zu erzeugen, und wobei aus den Empfangssignalen Informationen über das Objekt an den mehreren Auftrefforten der ausgesandten Lichtstrahlen (26a-d) gewonnen werden, wobei jeweils ein ausgesandter Lichtstrahl (26a-d) und ein zugeordneter Lichtempfänger (34a-d) einen eigenen Überwachungsstrahl bilden und ein Empfangslichtfleck bei nahen Abständen des Objekts den gemäß der Grundordnung zugeordneten Lichtempfänger (34a-d) nicht mehr trifft,
**dadurch gekennzeichnet,**
**dass** bei der Gewinnung von Informationen über das Objekt an mindestens einem Auftreffort eines ausgesandten Lichtstrahls (26a-d) zusätzlich mindestens ein Empfangssignal eines Lichtempfängers (34a-d) berücksichtigt wird, der nicht dem ausgesandten Lichtstrahl (26a-d) zugeordnet ist, so dass zur Auswertung des mindestens einen ausgesandten Lichtstrahls (26a-d) ein zusätzlicher Lichtempfänger (34a-b) beiträgt, der als zusätzlicher Nahbereichsdetektor des zugeordneten Lichtempfängers (34a-d) fungiert.

## Claims

1. An optoelectronic sensor (10) for detecting an object in a monitoring region (20) which has at least one light transmitter (22) for transmitting a plurality of mutually separated transmitted light beams (26a-d), a plurality of light receivers (34a-d) which are each assigned to one of the transmitted light beams (26a-d) in accordance with a basic arrangement, for generating a reception signal from the assigned light beam (26, 30) remitted at the object, and an evaluation unit (46) which is configured to obtain information about the object at the respective impact location of the transmitted light beam (26a-d) from the reception signal of the light receiver (34a-d) which is assigned to the transmitted light beam (26a-d), wherein a transmitted light beam (26a-d) and an assigned light receiver (34a-d) form a respective monitoring beam and a reception light spot at close distances of the object no longer impinges on the light receiver (34a-d) assigned according to the basic arrangement, **characterized in that** the evaluation unit (46) is furthermore configured to additionally consider, on acquiring information about the object at the impact location of at least one transmitted light beam (26a-d), at least one reception signal of a light receiver (34a-b) which is not assigned to the transmitted light beam (26a-d), so that an additional light receiver (34a-b) which functions as an additional close-range detector of the assigned light receiver (34a-d) contributes to the evaluation of the at least one transmitted light beam (26a-d).

2. The sensor (10) according to claim 1,
wherein the evaluation unit (46) is configured to determine a distance of the object from a light time of flight between transmitting the transmitted light beams (26a-d) and receiving the remitted light beams (30).

3. The sensor (10) according to claim 1 or 2,
which is configured as a laser scanner and has a movable deflection unit (12) by means of which the transmitted light beams (26a-d) are periodically guided through the monitoring region (20) and thus form a plurality of scanning planes, the deflection unit (12) in particular being configured in the form of a rotatable scanning unit (12) in which the light transmitter (22) is accommodated.

4. The sensor (10) according to one of the previous claims,
wherein the arrangement of the light receivers (34a-d) form a two-dimensional pattern.

5. The sensor (10) according to claim 4,
wherein the transmitted light beams (26a-d) form a two-dimensional pattern in cross-section, in particular the same two-dimensional pattern as the arrangement of the light receivers (34a-d) except for scaling.

6. The sensor (10) according to claim 5,
   wherein the direction in which the receiving elements (34a-d) are arranged with respect to the arrangement of the transmitted light beams (26a-d) is rotated by an angle (β).

7. The sensor (10) according to claim 5 or 6,
   wherein the two-dimensional pattern of light receivers (34a-d) and/or the two-dimensional pattern of transmitted light beams (26a-d) comprises a matrix array.

8. The sensor (10) according to claim 7,
   wherein the matrix array is inclined.

9. The sensor (10) according to claims 3 and 8,
   wherein the matrix arrangement is inclined by an angle (α) at which the scanning planes are equidistantly arranged with respect to each other.

10. The sensor (10) according to one of the previous claims,
    wherein the evaluation unit (46) is configured to activate the light transmitters (22a-d) and light receivers (34a-d) successively in a multiplexing process, the respectively assigned light receiver (34a-d) being active during the transmission of an transmitted light beam (26a-d), and at least one further light receiver (34a-d) which is not assigned to the transmitted light beam (26a-d) is additionally activated for at least one transmitted light beam (26a-d).

11. The sensor (10) according to one of the previous claims,
    wherein the evaluation unit (46) is configured to individually evaluate the reception signal of the light receiver (34a-d) assigned to the transmitted light beam (26a-d) and the at least one additionally considered reception signal in order to compare or correct the results, or to form and evaluate a common signal therefrom.

12. The sensor (10) according to one of the previous claims,
    wherein a common receiving lens (32) is arranged in front of the light receivers (34a-d).

13. A method for detecting an object in a monitoring region (20), wherein a plurality of mutually separated light beams (26a-d) are transmitted into the monitoring region (20) and the light beams (30) remitted by the object are received in a respective light receiver (34a-d) which is assigned to the transmitted light beam (26a-d) in accordance with a basic arrangement, in order to generate a respective received signal, and wherein information about the object is obtained from the received signals at the plurality of impact locations of the transmitted light beams (26a-d), wherein a transmitted light beam (26a-d) and an assigned light receiver (34a-d) form a respective monitoring beam, and a reception light spot at close distances of the object no longer impinges on the light receiver (34a-d) assigned according to the basic arrangement,
**characterized in that**, on acquiring information about the object at the impact location of at least one transmitted light beam (26a-d), at least one reception signal of a light receiver (34a-b) which is not assigned to the transmitted light beam (26a-d) is additionally considered, so that an additional light receiver (34a-b) which functions as an additional close-range detector of the assigned light receiver (34a-d) contributes to the evaluation of the at least one transmitted light beam (26a-d).

## Revendications

1. Capteur optoélectronique (10) pour détecter un objet dans une région de surveillance (20) qui présente au moins un émetteur de lumière (22) pour transmettre une pluralité de faisceaux lumineux (26a-d) transmis mutuellement séparés, une pluralité de récepteurs de lumière (34a-d) qui sont chacun affectés à un des faisceaux lumineux (26a-d) transmis selon une disposition de base, pour générer un signal de réception du faisceau lumineux (26, 30) affecté remis à l'objet, et une unité d'évaluation (46) qui est configurée pour obtenir des informations sur l'objet au point d'impact respectif du faisceau lumineux (26a-d) émis à partir du signal de réception du récepteur de lumière (34a-d) qui est affecté au faisceau lumineux (26a-d) émis, où un faisceau lumineux (26a-d) émis et un récepteur lumineux (34a-d) affecté forment respectivement un faisceau de surveillance et un spot lumineux de réception à proximité de l'objet ne touche plus le récepteur de lumière (34a-d) affecté selon la disposition de base, **caractérisé en ce que** l'unité d'évaluation (46) est en outre configurée pour prendre en compte en outre, lors de l'acquisition d'informations sur l'objet au point d'impact d'au moins un faisceau lumineux (26a-d) émis, au moins un signal de réception d'un récepteur lumineux (34a-b) non affecté au faisceau lumineux (26a-d) émis, afin qu'un récepteur lumineux (34a-b) supplémentaire qui fonctionne comme un détecteur à courte portée du récepteur lumineux (34a-d) affecté participe en supplément à l'évaluation dudit au moins un faisceau lumineux (26a-d) transmis.

2. Le capteur (10) selon la revendication 1,
   dans laquelle l'unité d'évaluation (46) est configurée pour déterminer une distance de l'objet à partir d'un temps de vol de lumière entre la transmission des faisceaux lumineux (26a-d) transmis et la réception des faisceaux lumineux (30) remis.

3. Le capteur (10) selon la revendication 1 ou 2, qui est réalisé sous la forme d'un scanner laser et qui présente une unité de déviation mobile (12) au moyen de laquelle les faisceaux lumineux (26a-d) transmis sont guidés périodiquement à travers la zone de surveillance (20) et forment ainsi plusieurs plans de balayage, l'unité de déviation (12) étant notamment réalisée sous la forme d'une unité de balayage rotative (12) dans laquelle l'émetteur (22) est monté.

4. Le capteur (10) selon l'une des revendications précédentes, dans laquelle l'agencement des récepteurs de lumière (34a-d) forme un motif bidimensionnel

5. Le capteur (10) selon la revendication 4, dans laquelle les faisceaux lumineux (26a-d) transmis forment un motif bidimensionnel en coupe transversale, en particulier le même motif bidimensionnel que l'agencement des récepteurs lumineux (34a-d) à l'exception de l'échelle.

6. Le capteur (10) selon la revendication 5, dans laquelle la direction dans laquelle les éléments de réception (34a-d) sont disposés par rapport à l'agencement des faisceaux lumineux (26a-d) transmis est tournée selon un angle ($\beta$).

7. Le capteur (10) selon la revendication 5 ou 6, dans laquelle le motif bidimensionnel de récepteurs de lumière (34a-d) et/ou le motif bidimensionnel de faisceaux lumineux (26a-d) transmis comprend une matrice.

8. Le capteur (10) selon la revendication 7, dans laquelle le réseau matriciel est incliné.

9. Le capteur (10) selon les revendications 3 et 8, dans laquelle l'agencement matriciel est incliné d'un angle ($\alpha$) auquel les plans de balayage sont disposés de manière équidistante les uns par rapport aux autres.

10. Le capteur (10) selon l'une des revendications précédentes, dans laquelle l'unité d'évaluation (46) est configurée pour activer successivement les émetteurs de lumière (22a-d) et les récepteurs de lumière (34a-d) dans un processus de multiplexage, le récepteur de lumière (34a-d) respectivement affecté étant actif pendant la transmission d'un faisceau lumineux (26a-d) transmis, et au moins un autre récepteur de lumière (34a-d) qui n'est pas affecté au faisceau lumineux (26a-d) transmis est également activé pour au moins un faisceau lumineux (26a-d) transmis.

11. Le capteur (10) selon l'une des revendications précédentes, dans laquelle l'unité d'évaluation (46) est configurée pour évaluer individuellement le signal de réception du récepteur de lumière (34a-d) affecté au faisceau lumineux (26a-d) émis et le au moins un signal de réception supplémentaire considéré pour comparer ou corriger les résultats, ou pour former et évaluer un signal commun à partir de celui-ci.

12. Le capteur (10) selon l'une des revendications précédentes, dans laquelle une lentille de réception (32) commune est disposée devant les récepteurs de lumière (34a-d).

13. Procédé de détection d'un objet dans une zone de surveillance (20), dans lequel une pluralité de faisceaux lumineux mutuellement (26a-d) séparés sont transmis dans la zone de surveillance (20) et les faisceaux lumineux (30) émis par l'objet sont reçus dans un récepteur de lumière (34a d) prospective qui est affecté au faisceau lumineux (26a-d) émis selon une disposition de base, afin de générer un signal reçu respectif, et dans lequel des informations sur l'objet sont obtenues à partir des signaux reçus au niveau de la pluralité d'emplacements d'impact des faisceaux lumineux (26a-d) émis, dans lequel un faisceau lumineux (26a-d) émis et un récepteur de lumière (34a-d) affecté forment un faisceau de surveillance respectif, et un spot lumineux de réception à proximité de l'objet ne touche plus le récepteur lumineux (34a-d) tel que signé selon la disposition de base, **caractérisé en ce que**, lors de l'acquisition d'informations sur l'objet lors de l'impact d'au moins un faisceau lumineux (26a-d) émis, au moins un signal de réception d'un récepteur de lumière (34a-b) qui n'est pas affecté au faisceau lumineux (26a-d) émis est en outre considéré, de sorte qu'un récepteur lumineux (34a-b) supplémentaire qui fonctionne comme un détecteur à courte portée du récepteur lumineux (34a-d) affecté participe en supplément à l'évaluation dudit au moins un faisceau lumineux (26a-d) transmis.

Figur 1

Figur 2a

22

22a

22b

22c

50      22d      52

Figur 2b

22

22a

22b      22c

50      22d      52

Figur 3

20

26a      26b

22a      24

26c      26d

Figur 4

22a      22b

$d_1$      $\alpha$      $d_2$

x

b

$\alpha$

22c      22d

a

Figur 5

Figur 6a

Figur 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- US 4656462 A
- DE 102004014041 A1
- WO 102015121839 A
- DE 19721105 A1

- EP 2998700 B1
- US 20150131080 A1
- US 20160282453 A1
- US 20160041266 A1